# EUROPÄISCHE PATENTANMELDUNG

(11) **EP 2 993 240 A1**
(43) Veröffentlichungstag der Anmeldung: **09.03.2016**
(21) Anmeldenummer: 14183936.5
(22) Anmeldetag: 08.09.2014
(51) Int. Cl.: C21C 5/30, F27D 3/16, F23L 13/02, F16K 47/04, F23N 1/00, F16K 5/04

(54) **Drosseleinrichtung, Ofen und Verfahren zum Betreiben des Ofens**

(71) Anmelder: Primetals Technologies Austria GmbH, 4031 Linz (AT)
(72) Erfinder: Hartl, Franz, 4020 Linz (AT); Rohrhofer, Andreas, 4020 Linz (AT); Weinzinger, Michael, 4020 Linz (AT); Fischer, Paul, 4040 Linz (AT)
(74) Vertreter: Metals@Linz

(57) **Zusammenfassung**

Die Erfindung betrifft eine Drosseleinrichtung (1) zur Beeinflussung einer Durchflussmenge eines Fluides (2) in einer Rohrleitung (3) umfassend:
- einen Rohrleitungsabschnitt (4) mit einer Längsachse (4a) sowie einer Eintrittsöffnung (4') und einer Austrittsöffnung (4") für das Fluid (2);
- eine Welle (5) mit einer Wellenlängsachse (5a), wobei die Welle (5) um die Wellenlängsachse (5a) rotierbar ist;
- eine an der Welle (5) befestigte und mit der Welle (5) um die Wellenlängsachse (5a) rotierbare Nabe (6), die mindestens einen Durchtrittskanal (6a) für das Fluid (2) aufweist, wobei die Nabe (6) in dem Rohrleitungsabschnitt (4) zwischen der Eintrittsöffnung (4') und der Austrittsöffnung (4") angeordnet ist und in eine erste Position bringbar ist, in welcher der mindestens eine Durchtrittskanal (6a) einen Durchtritt von Fluid (2) durch den Rohrleitungsabschnitt (4) gewährt und in eine zweite Position bringbar ist, in welcher der Durchtritt des Fluides (2) durch den mindestens einen Durchtrittskanal (6a) und den Rohrleitungsabschnitt (4) versperrt ist.

## Beschreibung

Die Erfindung betrifft eine Drosseleinrichtung zur Beeinflussung einer Durchflussmenge eines Fluides in einer Rohrleitung umfassend einen Rohrleitungsabschnitt mit einer Längsachse sowie einer Eintrittsöffnung und einer Austrittsöffnung für das Fluid. Die Erfindung betrifft weiterhin einen Ofen mit einem Ofengefäß zur Aufnahme einer Schmelze und mit mindestens einer Düse zum Zuführen mindestens eines Fluides zur Schmelze, wobei die mindestens eine Düse in einem Boden des Ofengefäßes und/oder einer Seitenwand des Ofengefäßes angeordnet ist und wobei die mindestens eine Düse mit einer Rohrleitung zum Zuführen des Fluides zur Düse verbunden ist. Schließlich betrifft die Erfindung ein Verfahren zum Betreiben eines solchen Ofens, wobei im Ofengefäß eine Schmelze bereitgestellt wird und der mindestens einen Düse das Fluid zugeführt wird.

Drosseleinrichtungen, Öfen und Verfahren der eingangs genannten Art sind bereits bekannt. So offenbart die EP 1560936 B1 ein Gaszuleitungssystem für einen metallurgischen Ofen sowie ein Betriebsverfahren hierzu. Das Gaszuleitungssystem ist für einen Einsatz an einem seiten- und/oder bodenblasenden Ofen geeignet, wobei über mindestens eine Düse in der Ofenseitenwand oder im Ofenboden Gas gepulst in das Innere des Ofens gefördert wird. Der Düse ist eine Zuflussdrosseleinrichtung vor- oder zugeordnet, welche über eine Steuereinrichtung derart gesteuert wird, dass die Schaltfrequenz der Zuflussdrosseleinrichtung oberhalb 5 Hz liegt. Als Zuflussdrosseleinrichtungen dienen Magnetventile oder Servoventile.

Problematisch ist bei Verwendung dieser Ventilarten, dass sie im gepulsten Betrieb einem hohen Verschleiß unterliegen. Der Wartungsaufwand ist in Folge hoch.

Auch der bereits bekannte Einsatz von Proportionalventilen ist problembehaftet, das diese träge sind und in der Regel nur kleine Pulsfrequenzen < 0,2 Hz erlauben.

Es ist daher Aufgabe der Erfindung eine Drosseleinrichtung bereitzustellen, die zur Pulserzeugung geeignet ist und gleichzeitig einen langfristigen und wartungsarmen Betrieb ermöglicht. Weiterhin ist es Aufgabe der Erfindung, einen Ofen mit einer derartigen Drosseleinrichtung und ein Verfahren zum Betreiben des Ofens bereitzustellen.

Die Aufgabe wird für eine Drosseleinrichtung zur Beeinflussung einer Durchflussmenge eines Fluides in einer Rohrleitung gelöst, indem diese umfasst:
- einen Rohrleitungsabschnitt mit einer Längsachse sowie einer Eintrittsöffnung und einer Austrittsöffnung für das Fluid;
- eine Welle mit einer Wellenlängsachse, wobei die Welle um die Wellenlängsachse rotierbar ist;
- eine an der Welle befestigte und mit der Welle um die Wellenlängsachse rotierbare Nabe, die mindestens einen Durchtrittskanal für das Fluid aufweist, wobei die Nabe in dem Rohrleitungsabschnitt zwischen der Eintrittsöffnung und der Austrittsöffnung angeordnet ist und in eine erste Position bringbar ist, in welcher der mindestens eine Durchtrittskanal einen Durchtritt von Fluid durch den Rohrleitungsabschnitt gewährt und in eine zweite Position bringbar ist, in welcher der Durchtritt des Fluides durch den mindestens einen Durchtrittskanal und den Rohrleitungsabschnitt versperrt ist.

Die Drosseleinrichtung ist dazu in der Lage, die Durchflussmenge des Fluides temporär und hochdynamisch zu begrenzen und so einen gepulsten Fluiddurchtritt durch den Rohrleitungsabschnitt bereitzustellen. Die einfache mechanische Ausgestaltung der Drosseleinrichtung ist dabei auch im Dauerpulsbetrieb verschleißarm betreibbar. Häufige Wartung oder Kontrolle durch geschultes Bedienpersonal dann dadurch entfallen.

Weiterhin sind keinerlei aufwendige Dichtungen an der Drosseleinrichtung erforderlich, um dauerhaft einen Pulsbetreib zu gewährleisten. Dabei ist die Drosseleinrichtung sowohl mit gasförmigen wie auch flüssigen Medien betreibbar. Insbesondere ist auch ein Einsatz möglich, bei dem ein Aerosol eingesetzt wird. Dabei wird das Gas als Träger für pulverförmige oder flüssige Zuschlagstoffe eingesetzt.

Insbesondere weist die Drosseleinrichtung einen Motor zum Antrieb der Welle und der Nabe auf. Dadurch lassen sich beliebige Drehzahlen der Nabe zuverlässig einstellen. Aber auch alternative Antriebseinheiten können zum Antrieb der Welle eingesetzt werden.

Die Wellenlängsachse der Welle ist bevorzugt senkrecht zur Längsachse des Rohrleitungsabschnitts angeordnet. Dies ermöglicht eine einfache Bewegung der Nabe im Rohrleitungsabschnitt und ein schnelles Versperren des Fluiddurchtritts.

Bevorzugt weist der Rohrleitungsabschnitt in dem Bereich, in welchem sich die Nabe befindet, eine Ausbuchtung auf. Dadurch kann ein Durchtrittskanal ausgebildet werden, dessen Durchmesser im Wesentlichen dem des Rohrleitungsabschnitts, insbesondere auch dem Durchmesser der Eintritts- und/oder Austrittsöffnung, entspricht.

Insbesondere ist der mindestens eine Durchtrittskanal in der ersten Position parallel und/oder konzentrisch zur Längsache des Rohrleitungsabschnitts ausgerichtet. Dies ermöglicht einen nahezu ungehinderten Durchtritt des Fluides.

In der zweiten Position ist der mindestens eine Durchtrittskanal vorzugsweise senkrecht zur Längsache des Rohrleitungsabschnitts ausgerichtet. Hierbei wird eine optimale Sperrwirkung für das Fluid erzielt und es erfolgt ein Druckaufbau im Fluid im Rohrleitungsabschnitt stromaufwärts der Nabe.

Der mindestens eine Durchtrittskanal ist dabei bevorzugt zylinderförmig ausgebildet, weist eine Verengung oder einen kurvigen Verlauf auf. Diese Ausgestaltungen des Durchtrittskanals gestatten einen ungehinderten Durchtritt des aufgestauten Fluides, sobald der Durchtritt durch diesen freigegeben wird.

Eine Abänderung der Geometrie der Nabe und/oder des Durchtrittskanals ermöglicht eine Änderung der Form des erzeugten Pulses sowie eine Anpassung an den jeweiligen Anforderungsfall.

Der Rohrleitungsabschnitt weist im Bereich der Eintrittsöffnung und im Bereich der Austrittsöffnung vorzugsweise jeweils eine Flanschanordnung auf. Dadurch lässt sich die Drosseleinrichtung optimal in bestehende Rohrleitungen einbauen. Aber auch ein Einbau einer Drosseleinrichtung ohne Flansche in eine Rohrleitung wäre möglich, beispielsweise über eine Verbindung des Rohrleitungsabschnitts mit einer Rohrleitung durch Schweißen.

Insbesondere weist der Rohrleitungsabschnitt, insbesondere weiterhin die Eintrittsöffnung und/oder die Austrittsöffnung, einen Durchmesser im Bereich von 100 bis 600 mm, insbesondere im Bereich von 300 bis 600 mm, auf. Es ist ein besonderer Vorteil der erfindungsgemäßen Drosseleinrichtung, dass diese auch Rohrleitungen mit großem Durchmesser optimal versorgen kann.

Die Aufgabe wird weiterhin gelöst für einen Ofen mit einem Ofengefäß zur Aufnahme einer Schmelze, insbesondere einer Metallschmelze, und mit mindestens einer Düse zum Zuführen mindestens eines Fluides zur Schmelze, wobei die mindestens eine Düse in einem Boden des Ofengefäßes und/oder einer Seitenwand des Ofengefäßes angeordnet ist und wobei die mindestens eine Düse mit einer Rohrleitung zum Zuführen des Fluides zur Düse verbunden ist, indem die Rohrleitung eine erfindungsgemäße Drosseleinrichtung umfasst.

Die oben für die Drosseleinrichtung genannten Vorteile gelten auch für den Ofen, der mindestens eine solche umfasst.

Der Ofen ist insbesondere ein metallurgischer Ofen, wie ein Konverter.

Bevorzugt sind weiterhin mindestens eine Fluidzuführleitung und eine damit verbundene Fluidspeichereinrichtung vorhanden, wobei die Fluidspeichereinrichtung mit der Rohrleitung verbunden ist. Die Fluidspeichereinrichtung dient zur Dämpfung der mittels der Drosseleinrichtung erzeugten Pulse an der Versorgungsseite des Fluides bzw. im Bereich der Fluidzuführleitung.

Die Fluidzuführleitung und die mindestens eine Düse sind weiterhin vorzugsweise über mindestens eine Bypass-Leitung für das Fluid miteinander verbunden. Eine derartige Bypass-Leitung gewährleistet eine permanente Fluidzufuhr bei einem Mindestdurchfluss zu der mindestens einen Düse und verhindert zuverlässig, dass Schmelze aus dem Ofengefäß in die Düse und weiterhin die Rohrleitung zurückfließen kann.

Am Ofen sind bevorzugt mehrere Düsen vorhanden. Im Falle eines Konverters ist je nach dessen Größe ein Einsatz von bis zu 16 Düsen üblich.

Vorzugsweise ist dabei eine jede Düse mit jeweils einer Rohrleitung umfassend eine Drosseleinrichtung verbunden.

Alternativ ist es von Vorteil, wenn mehrere Düsen vorhanden sind und eine erste Teilmenge dieser Düsen und mindestens eine zweite Teilmenge dieser Düsen jeweils mit einer Rohrleitung umfassend eine Drosseleinrichtung verbunden sind. Eine derartige Gruppierung von Düsen verringert den apparativen Aufwand und damit auch den Platzbedarf für die Verrohrung.

Die Aufgabe wird für das Verfahren zum Betreiben des erfindungsgemäßen Ofens gelöst, indem im Ofengefäß eine Schmelze bereitgestellt wird, wobei der mindestens einen Düse ein gleichmäßiger Fluidstrom zugeführt wird, wobei die Welle der Drosseleinrichtung rotiert wird und der mindestens einen Düse über die Rohrleitung weiterhin ein gepulster Fluidstrom zur Abgabe an die Schmelze im Ofengefäß zugeführt wird.

Durch eine einfache Änderung der Drehzahl des Motors wird die Pulsfrequenz des Fluidstroms proportional eingestellt. Dabei ist eine hochgenaue Pulsweiteneinstellung auch bei hohen Drehzahlen möglich. Somit kann die Drehzahl des Motors in einfacher Weise zur Steuerung der Pulsfrequenz und der Pulsweite eingesetzt werden.

Das Fluid wird dabei bevorzugt durch ein Gas, insbesondere durch Sauerstoff, Luft, Inertgas oder Mischungen daraus, oder ein Aerosol gebildet. Im Falle eines Ofens in Form eines Konverters mit einer Schmelzenaufnahmekapazität von etwa 200 t ist es üblich, eine jede Düse mit etwa 0,5 m³/min Gas und 6 bar Ausgangsdruck an der Düse zu beaufschlagen.

Die Figuren 1 bis 9 sollen die Erfindung beispielhaft erläutern. So zeigt:
- FIG 1: eine Seitenansicht einer Drosseleinrichtung mit einer kugelförmigen Nabe mit zylinderförmigem Durchtrittskanal;
- FIG 2: die Drosseleinrichtung gemäß den Figuren 1 und 2 in der Draufsicht;
- FIG 3: einen Schnitt III-III durch die Drosseleinrichtung aus FIG 2;
- FIG 4: den Verlauf des Fluidstroms Q vor und nach der Drosseleinrichtung nach FIG 1 und FIG 2;
- FIG 5: einen Ausschnitt aus einer Drosseleinrichtung mit einer Nabe, die einen Durchtrittskanal mit Verengung aufweist;
- FIG 6: den Verlauf des Fluidstroms Q nach der Drosseleinrichtung gemäß FIG 5;
- FIG 7: einen Ausschnitt aus einer weiteren Drosseleinrichtung mit einer Nabe, die einen Durchtrittskanal mit kurvigem Verlauf aufweist;
- FIG 8: den Verlauf des Fluidstroms Q nach der Drosseleinrichtung gemäß FIG 7; und
- FIG 9: einen Ofen im Schnitt mit einer Drosseleinrichtung.

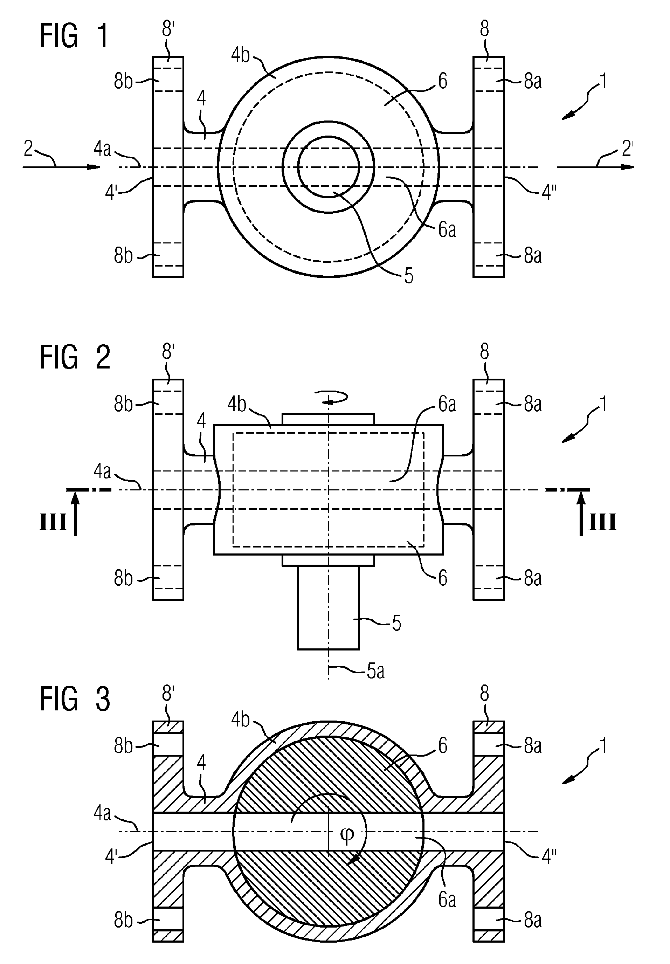

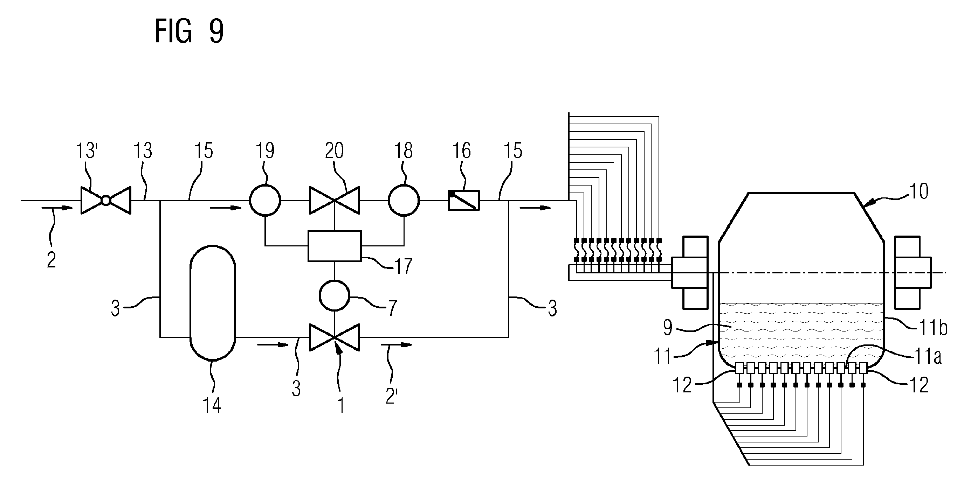

FIG 1 zeigt eine Seitenansicht einer Drosseleinrichtung 1 mit einem Rohrleitungsabschnitt 4, der eine Längsachse 4a und eine Ausbuchtung 4b aufweist. Der Rohrleitungsabschnitt 4 weist weiterhin eine Eintrittsöffnung 4' für Fluid 2 und eine Austrittsöffnung 4" für Fluid 2' auf, in deren Bereich sich jeweils eine Flanschanordnung 8, 8' mit Bohrungen 8a, 8b befindet. In der Ausbuchtung ist gestrichelt eine Nabe 6 mit zylinderförmigem Durchtrittskanal 6a angedeutet. Die Nabe 6 ist über eine Welle 5 drehbar. Die Welle 5 ist dabei bevorzugt durch einen Motor 7 angetrieben (siehe FIG 9).

FIG 2 zeigt die Drosseleinrichtung gemäß FIG 1 in der Draufsicht. Gleiche Bezugszeichen kennzeichnen gleiche Elemente. Auch hier ist gestrichelt die Lage der Nabe 6 inklusive des Durchtrittskanals 6a angedeutet. Die Welle 5 weist eine Wellenlängsachse 5a auf, die hier senkrecht zur Längsachse 4a des Rohrleitungsabschnitts 4 ausgerichtet ist.

FIG 3 zeigt einen Schnitt III-III durch die Drosseleinrichtung 1 aus FIG 2. Gleiche Bezugszeichen kennzeichnen gleiche Elemente. Die Nabe 6 ist über die Welle 5 (siehe FIG 1) drehbar und hier in einer ersten Position angeordnet, in welcher der Durchtrittskanal 6a einen Durchtritt von Fluid 2 durch den Rohrleitungsabschnitt 4 gewährt. Dabei verläuft die Längsachse 4a des Rohrleitungsabschnitts 4 auf der Längsachse des Durchtrittskanals 6a. Die Nabe 6 ist in der Ausbuchtung 4b rotierbar und hier in einem Winkel ϕ = 0° zu einer Senkrechten ausgerichtet.

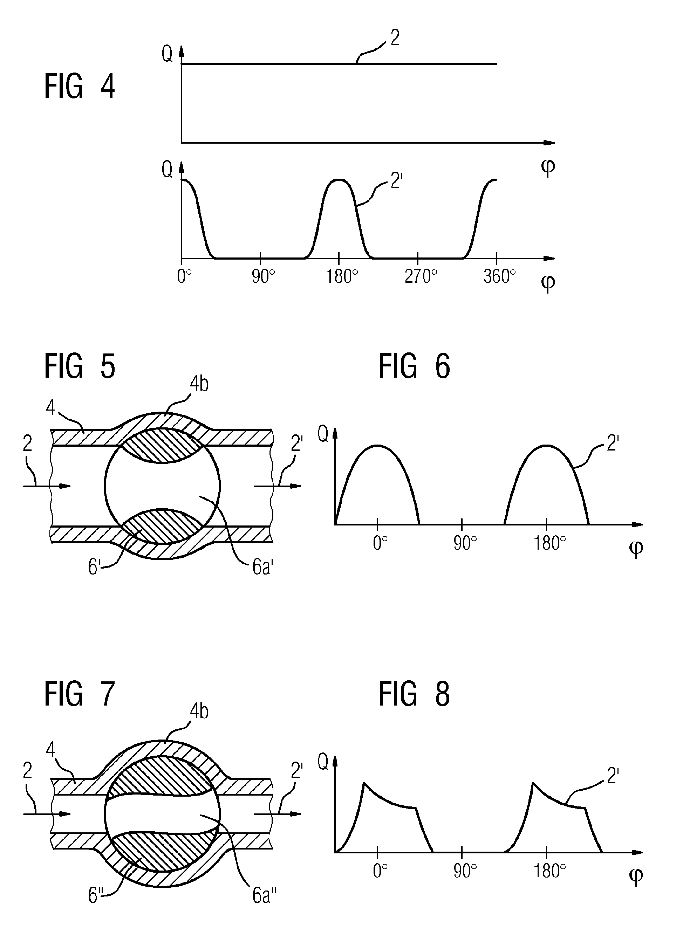

FIG 4 zeigt in der oberen Bildhälfte den Verlauf des Fluidstroms Q vor der Drosseleinrichtung 1 nach FIG 3 und in der unteren Bildhälfte den Verlauf des Fluidstroms Q nach der Drosseleinrichtung 1 nach FIG 3 in Abhängigkeit von der der Winkelstellung der Nabe 6.

Im Bereich der Eintrittsöffnung 4' in den Rohrleitungsabschnitt 4 wird das Fluid 2 in einem gleichmäßigen Volumenstrom Q angeliefert, unabhängig von der Winkelstellung der Nabe 6. Im Bereich der Austrittsöffnung 4" aus dem Rohrleitungsabschnitt 4 wird das Fluid 2' gepulst abgegeben, wenn die Nabe 6 rotiert. Während der Durchtrittskanal 6a bei ϕ = 0° bzw. 360° und ϕ = 180°das im Bereich der Eintrittsöffnung 4' ankommende Fluid 2 ungehindert hindurchlässt, versperrt die Nabe 6 den Fluiddurchtritt bei ϕ = 90° und ϕ = 270°. Der Volumenstrom Q des aus dem Rohrleitungsabschnitt 4 austretenden Fluids 2' weist demnach einen gepulsten Verlauf auf, siehe untere Bildhälfte. Die Pulsweite und die Pulsform ist dabei abhängig von der Ausgestaltung des Durchtrittskanals 6a und der Drehzahl der Welle 5.

FIG 5 zeigt einen Ausschnitt aus einer Drosseleinrichtung mit einer Nabe 6', die einen Durchtrittskanal 6a'mit einer Verengung aufweist. Die Nabe 6' befindet sich in der hier gewählten Darstellung in der Winkelstellung ϕ = 0°. Gleiche Bezugszeichen wie in FIG 3 kennzeichnen gleiche Elemente.

FIG 6 zeigt den Verlauf des Fluidstroms Q des Fluids 2' nach der Drosseleinrichtung gemäß FIG 5 in Abhängigkeit von der Winkelstellung der Nabe 6'. Die Pulsweite und die Pulsform ist dabei abhängig von der Ausgestaltung des Durchtrittskanals 6a' und der Drehzahl der Welle 5 (vergleiche FIG 2).

FIG 7 zeigt einen Ausschnitt aus einer weiteren Drosseleinrichtung mit einer Nabe 6", die einen Durchtrittskanal 6a" mit kurvigem Verlauf aufweist. Die Nabe 6" befindet sich in der hier gewählten Darstellung in der Winkelstellung ϕ = 0°. Gleiche Bezugszeichen wie in FIG 3 kennzeichnen gleiche Elemente.

FIG 8 zeigt den Verlauf des Fluidstroms Q des Fluids 2' nach der Drosseleinrichtung gemäß FIG 7 in Abhängigkeit von der Winkelstellung der Nabe 6". Die Pulsweite und die Pulsform ist dabei abhängig von der Ausgestaltung des Durchtrittskanals 6a" und der Drehzahl der Welle 5 (vergleiche FIG 2).

FIG 9 zeigt einen Ofen 10 mit einem Ofengefäß 11, das einen Boden 11a und Seitenwände 11b aufweist. Bei dem Ofen 10 handelt es sich hier um einen Konverter. Im Ofengefäß 11 befindet sich eine Schmelze 9, welcher über im Boden 11a des Ofengefäßes 11 eingebaute Düsen 12 ein Fluid 2 zugeführt wird. Es sind zur besseren Übersicht lediglich zwei der insgesamt zwölf vorhandenen Düsen 12 dargestellt. Den Düsen 12 wird über eine Bypass-Leitung 15 permanent ein Teil des Fluids 2 zugeführt. Hier wird als Fluid 2 ein Gas eingesetzt. Die Bypass-Leitung 15 weist dabei ein Regelventil 20 zur Feinregulierung des über die Bypass-Leitung 15 geführten, gleichmäßigen Fluidstroms, eine Druckmesseinrichtung 19 und eine Flussmesseinrichtung 18 auf. Weiterhin ist eine Rückschlagklappe 16 vorhanden, welche einen Rückstrom von Fluid 2 oder auch Schmelze 9 aus dem Ofen 10 verhindern soll. Das Regelventil 20 wird über eine Steuereinrichtung 17 gesteuert, welcher auch die Ergebnisse der Druckmessung, welche mittels der Druckmesseinrichtung 19 durchgeführt wird, und weiterhin der Flussmessung, welche mittels der Flussmesseinrichtung 18 durchgeführt wird, zugeführt werden.

Das Fluid 2 strömt über eine Fluidzuführleitung 13 mit einer Absperreinrichtung 13' einerseits in die Bypass-Leitung 15 und weiterhin in die Rohrleitung 3 und füllt eine Fluidspeichereinrichtung 14. Von der Fluidspeichereinrichtung 14 führt die Rohrleitung 3 weiter zu einer Drosseleinrichtung 1, deren Welle 5 (siehe FIG 2) von einem Motor 7 angetrieben wird. Die Drehzahl des Motors 7 wird über die Steuereinrichtung 17 oder eine davon unabhängige weitere Steuereinrichtung gesteuert. Über die Rohrleitung 3 gelangt aus der Drosseleinrichtung 1 austretendes Fluid 2'gepulst in Richtung der Düsen 12 und überlagert den gleichmäßigen Fluidstrom aus der Bypass-Leitung 15. Hier sind alle Düsen 12 an lediglich einer Drosseleinrichtung 1 und einer Bypass-Leitung 15 angeschlossen. Alternativ kann pro Düse 12 eine Bypass-Leitung 15 und eine Drosseleinrichtung 1 vorgesehen sein. Weiterhin können Gruppen von Düsen 12 mit einer Bypass-Leitung 15 und einer Drosseleinrichtung 1 verbunden sein.

Die Figuren 1 bis 9 sollen dabei lediglich Beispiele für die erfindungsgemäße Drosseleinrichtung und einen damit ausgestatteten Ofen zeigen. So Kann die Form des Rohrleitungsabschnitts, der Nabe und des Durchtrittskanals durch die Nabe sowie die Anzahl und Anordnung der Durchtrittskanäle variieren.

## Patentansprüche

1. Drosseleinrichtung (1) zur Beeinflussung einer Durchflussmenge eines Fluides (2) in einer Rohrleitung (3) umfassend:
- einen Rohrleitungsabschnitt (4) mit einer Längsachse (4a) sowie einer Eintrittsöffnung (4') und einer Austrittsöffnung (4") für das Fluid (2);
- eine Welle (5) mit einer Wellenlängsachse (5a), wobei die Welle (5) um die Wellenlängsachse (5a)rotierbar ist;
- eine an der Welle (5) befestigte und mit der Welle (5) um die Wellenlängsachse (5a) rotierbare Nabe (6), die mindestens einen Durchtrittskanal (6a) für das Fluid (2) aufweist, wobei die Nabe (6) in dem Rohrleitungsabschnitt (4) zwischen der Eintrittsöffnung (4') und der Austrittsöffnung (4") angeordnet ist und in eine erste Position bringbar ist, in welcher der mindestens eine Durchtrittskanal (6a) einen Durchtritt von Fluid (2) durch den Rohrleitungsabschnitt (4) gewährt und in eine zweite Position bringbar ist, in welcher der Durchtritt des Fluides (2) durch den mindestens einen Durchtrittskanal (6a) und den Rohrleitungsabschnitt (4) versperrt ist.

2. Drosseleinrichtung (1) nach Anspruch 1,
wobei ein Motor (7) zum Antrieb der Welle (5) und der Nabe (6) vorhanden ist.

3. Drosseleinrichtung (1) nach Anspruch 1 oder 2,
wobei die Wellenlängsachse (5a) senkrecht zur Längsachse (4a) des Rohrleitungsabschnitts (4) angeordnet ist.

4. Drosseleinrichtung (1) nach einem der Ansprüche 1 bis 3,
wobei der Rohrleitungsabschnitt (4) in dem Bereich, in welchem sich die Nabe (6) befindet, eine Ausbuchtung (4b) aufweist.

5. Drosseleinrichtung (1) nach einem der Ansprüche 1 bis 4, wobei der mindestens eine Durchtrittskanal (6a) in der ersten Position parallel und/oder konzentrisch zur Längsache (4a) des Rohrleitungsabschnitts (4) ausgerichtet ist.

6. Drosseleinrichtung (1) nach einem der Ansprüche 1 bis 5, wobei der mindestens eine Durchtrittskanal (6a) in der zweiten Position senkrecht zur Längsache (4a) des Rohrleitungsabschnitts (4) ausgerichtet ist.

7. Drosseleinrichtung (1) nach einem der Ansprüche 1 bis 6, wobei der mindestens eine Durchtrittskanal (6a) zylinderförmig ausgebildet ist oder eine Verengung oder einen kurvigen Verlauf aufweist.

8. Drosseleinrichtung (1) nach einem der Ansprüche 1 bis 7, wobei der Rohrleitungsabschnitt (4) im Bereich der Eintrittsöffnung (4') und im Bereich der Austrittsöffnung (4") jeweils eine Flanschanordnung (8, 8') aufweist.

9. Drosseleinrichtung (1) nach einem der Ansprüche 1 bis 8, wobei der Rohrleitungsabschnitt (4), insbesondere weiterhin die Eintrittsöffnung (4') und/oder die Austrittsöffnung (4"), einen Durchmesser im Bereich von 100 bis 600 mm, insbesondere im Bereich von 300 bis 600 mm, aufweist.

10. Ofen (10), insbesondere metallurgischer Ofen, mit einem Ofengefäß (11) zur Aufnahme einer Schmelze (9), insbesondere einer Metallschmelze, und mit mindestens einer Düse (12) zum Zuführen mindestens eines Fluides (2) zur Schmelze (9), wobei die mindestens eine Düse (12) in einem Boden (11a) des Ofengefäßes (11) und/oder einer Seitenwand (11b) des Ofengefäßes (11) angeordnet ist und wobei die mindestens eine Düse (12) mit einer Rohrleitung (3) zum Zuführen des Fluids (2) zur Düse (12) verbunden ist, wobei die Rohrleitung (3) eine Drosseleinrichtung (1) nach einem der Ansprüche 1 bis 9 umfasst.

11. Ofen (10) nach Anspruch 10,
wobei weiterhin mindestens eine Fluidzuführleitung (13) und eine damit verbundene Fluidspeichereinrichtung (14) vorhanden sind, wobei die Fluidspeichereinrichtung (14) mit der Rohrleitung (3) verbunden ist.

12. Ofen (10) nach Anspruch 11,
wobei die Fluidzuführleitung (13) und die mindestens eine Düse (2) weiterhin über mindestens eine Bypass-Leitung (15) für das Fluid (2) miteinander verbunden sind.

13. Ofen (10) nach einem der Ansprüche 10 bis 12,
wobei mehrere Düsen (12) vorhanden sind und eine jede Düse (12) mit jeweils einer Rohrleitung (3) umfassend eine Drosseleinrichtung (1) verbunden ist.

14. Ofen (10) nach einem der Ansprüche 10 bis 12,
wobei mehrere Düsen (12) vorhanden sind und eine erste Teilmenge dieser Düsen (12) und mindestens eine zweite Teilmenge dieser Düsen (12) jeweils mit einer Rohrleitung (3) umfassend eine Drosseleinrichtung (1) verbunden sind.

15. Verfahren zum Betreiben eines Ofens (10) nach einem der Ansprüche 10 bis 14,
wobei im Ofengefäß (11) eine Schmelze (9) bereitgestellt wird, wobei der mindestens einen Düse (12) ein gleichmäßiger Fluidstrom zugeführt wird, wobei die Welle (5) der Drosseleinrichtung (1) rotiert wird und der mindestens einen Düse (12) über die Rohrleitung (3) weiterhin ein gepulster Fluidstrom zur Abgabe an die Schmelze (9) im Ofengefäß (11) zugeführt wird.

16. Verfahren nach Anspruch 15,
wobei das Fluid (2) durch ein Gas, insbesondere durch Sauerstoff, Luft, Inertgas oder Mischungen daraus, oder ein Aerosol gebildet wird.
